# DEMANDE DE BREVET EUROPEEN

(11) **EP 4 575 345 A1**
(43) Date de publication de la demande: **25.06.2025**
(21) Numéro de dépôt: 24219662.4
(22) Date de dépôt: 13.12.2024
(51) Int. Cl.: F24S 23/70, F24S 23/71, F24S 23/74, G02B 5/08, G02B 5/09, G02B 5/28

(54) **CONCENTRATEUR D'UN RAYONNEMENT SOLAIRE, ET CENTRALE SOLAIRE CORRESPONDANTE**

(30) Priorité: 21.12.2023 FR 2314919
(71) Demandeur: Commissariat à l'Energie Atomique et aux Energies Alternatives, 75015 Paris (FR)
(72) Inventeur: VIDAL, Frédéric, 38054 GRENOBLE CEDEX 09 (FR); ALBERT, Raphaël, 38054 GRENOBLE CEDEX 09 (FR); LE BARON, Estelle, 38054 GRENOBLE CEDEX 09 (FR)
(74) Mandataire: INNOV-GROUP

(57) **Abrégé**

Concentrateur (C) d'un rayonnement solaire incident présentant un spectre solaire, le concentrateur (C) comportant :
- un miroir cylindro-parabolique (1), agencé pour recevoir le rayonnement solaire incident, conçu pour réfléchir un premier domaine spectral du spectre solaire ;
- un ensemble de réflecteurs (2), agencé au-dessus du miroir cylindro-parabolique (1) pour recevoir le rayonnement solaire incident, conçu pour transmettre le premier domaine spectral au miroir cylindro-parabolique (1) et réfléchir un deuxième domaine spectral, différent du premier domaine spectral.

## Description

### Domaine technique

L'invention se rapporte au domaine technique des concentrateurs solaires.

L'invention trouve notamment son application dans les centrales solaires à concentration cylindro-parabolique.

### État de l'art

Une centrale solaire connue de l'état de la technique comporte :
- au moins un miroir cylindro-parabolique, agencé pour recevoir un rayonnement solaire incident, et conçu pour réfléchir un domaine spectral du spectre solaire ;
- un récepteur, agencé pour recevoir le domaine spectral réfléchi par le miroir cylindro-parabolique.

Le récepteur peut être une cellule photovoltaïque ou une cellule photoélectrochimique. Une cellule photoélectrochimique comporte une photoanode et une photocathode sensibles au rayonnement solaire. A titre d'exemple non limitatif, la photoanode peut comporter une couche photocatalytique réalisée en dioxyde de titane TiO₂, tandis que la photocathode peut comporter une couche photocatalytique réalisée en oxyde de cuivre Cu₂O. Un tel récepteur de type cellule photoélectrochimique n'est pas entièrement satisfaisant en termes d'efficacité (ou de rendement) dans la mesure où le dioxyde de titane TiO₂ absorbe dans les ultraviolets (longueur d'onde inférieure à 400 nm) et que le rayonnement ultraviolet ne représente qu'environ 3% de l'énergie électromagnétique du soleil. Le rayonnement infrarouge représente majoritairement (environ 45%) l'énergie électromagnétique du soleil, et conduit à un transfert massif de chaleur à la cellule photoélectrochimique qui est susceptible de se dégrader dans le temps.

L'homme du métier recherche un concentrateur permettant une utilisation efficace de différents types de récepteurs de la centrale solaire, par exemple des récepteurs thermiques, des récepteurs de type cellule photovoltaïque, des récepteurs de type cellules photoélectrochimiques etc.

### Exposé de l'invention

L'invention vise à remédier en tout ou partie aux inconvénients précités. A cet effet, l'invention a pour objet un concentrateur d'un rayonnement solaire incident présentant un spectre solaire, le concentrateur comportant :
- un miroir cylindro-parabolique, agencé pour recevoir le rayonnement solaire incident, conçu pour réfléchir un premier domaine spectral du spectre solaire ;
- un ensemble de réflecteurs, agencé au-dessus du miroir cylindro-parabolique pour recevoir le rayonnement solaire incident, conçu pour transmettre le premier domaine spectral au miroir cylindro-parabolique et réfléchir un deuxième domaine spectral, différent du premier domaine spectral.

Ainsi, un tel concentrateur selon l'invention autorise une utilisation efficace de différents types de récepteurs. Un premier type de récepteur, adapté pour fonctionner de manière efficace dans le premier domaine spectral, pourra recevoir le rayonnement solaire réfléchi par le miroir cylindro-parabolique. Un deuxième type de récepteur, adapté pour fonctionner de manière efficace dans le deuxième domaine spectral, pourra recevoir le rayonnement solaire réfléchi par l'ensemble de réflecteurs.

Le concentrateur selon l'invention peut comporter une ou plusieurs des caractéristiques suivantes.

Selon une caractéristique de l'invention, les réflecteurs de l'ensemble sont choisis parmi des miroirs dichroïques et des miroirs de Bragg.

Ainsi, un avantage procuré par de tels réflecteurs est la possibilité de les concevoir aisément afin de transmettre un premier domaine spectral et de réfléchir un deuxième domaine spectral, différent du premier domaine spectral.

Selon une caractéristique de l'invention, le miroir cylindro-parabolique est réalisé dans un matériau choisi parmi l'argent et l'aluminium.

Ainsi, un avantage procuré par de tels matériaux est d'obtenir un coefficient de réflexion en intensité élevé sur une gamme spectrale importante du spectre solaire.

Selon une caractéristique de l'invention :
- le premier domaine spectral comporte au moins une gamme spectrale dans l'infrarouge ;
- le deuxième domaine spectral comporte au moins une gamme spectrale dans les ultraviolets.

Ainsi, un avantage procuré est d'autoriser une utilisation efficace de différents types de récepteurs. Un récepteur thermique, adapté pour fonctionner de manière efficace dans le premier domaine spectral, pourra recevoir le rayonnement solaire réfléchi par le miroir cylindro-parabolique. Un deuxième type de récepteur (e.g. cellule photovoltaïque, cellule photoélectrochimique), adapté pour fonctionner de manière efficace dans le deuxième domaine spectral, pourra recevoir le rayonnement solaire réfléchi par l'ensemble de réflecteurs.

Selon une caractéristique de l'invention, le concentrateur comporte une structure munie de première et deuxième surfaces de support opposées, transparentes dans le spectre solaire ; le miroir cylindro-parabolique s'étendant sur la première surface de support, l'ensemble de réflecteurs s'étendant sur la deuxième surface de support.

Ainsi, un avantage procuré est de faciliter le montage du miroir cylindro-parabolique et de l'ensemble de réflecteurs.

Selon une caractéristique de l'invention, la structure comporte une lame d'air, transparente dans le spectre solaire, agencée entre les première et deuxième surfaces de support opposées.

Ainsi, un avantage procuré est d'obtenir un coefficient de transmission en intensité élevé sur une gamme spectrale importante du spectre solaire.

Selon une caractéristique de l'invention, la structure comporte une plaque transparente dans le spectre solaire, comprenant les première et deuxième surfaces de support opposées.

Ainsi, un avantage procuré est d'obtenir une bonne tenue mécanique du miroir cylindro-parabolique et de l'ensemble de réflecteurs.

Selon une caractéristique de l'invention, la plaque est réalisée dans un matériau choisi parmi un verre extra-clair, le polycarbonate, le polyméthacrylate de méthyle, le polychlorure de vinyle.

Ainsi, un avantage procuré est d'obtenir un coefficient de transmission en intensité élevé sur une gamme spectrale importante du spectre solaire.

Selon une caractéristique de l'invention, la structure comporte des moyens de déplacement, configurés pour déplacer les première et deuxième surfaces de support en fonction d'une direction du rayonnement solaire incident, de manière à orienter le miroir cylindro-parabolique et l'ensemble de réflecteurs pour recevoir une intensité maximale du rayonnement solaire incident.

Ainsi, un avantage procuré est d'optimiser l'intensité des rayonnements réfléchis par le miroir cylindro-parabolique et par l'ensemble de réflecteurs.

L'invention a également pour objet une centrale solaire, comportant :
- au moins un concentrateur conforme à l'invention ;
- au moins un premier récepteur, agencé pour recevoir le premier domaine spectral réfléchi par le miroir cylindro-parabolique de l'au moins un concentrateur ;
- au moins un deuxième récepteur, agencé pour recevoir le deuxième domaine spectral réfléchi par l'ensemble de réflecteurs de l'au moins un concentrateur.

Ainsi, une telle centrale solaire selon l'invention autorise une utilisation efficace de différents types de récepteurs. Le ou les premiers récepteurs, adaptés pour fonctionner de manière efficace dans le premier domaine spectral, sont agencés pour recevoir le rayonnement solaire réfléchi par le miroir cylindro-parabolique. Le ou les deuxièmes récepteurs, adaptés pour fonctionner de manière efficace dans le deuxième domaine spectral, sont agencés pour recevoir le rayonnement solaire réfléchi par l'ensemble de réflecteurs.

### Définitions

- Le terme « concentrateur » désigne un concentrateur solaire.
- Par « réfléchir », on entend que le miroir cylindro-parabolique possède un coefficient de réflexion en intensité supérieur à 80%, de préférence supérieur à 85%, plus préférentiellement supérieur à 90% moyenné sur le premier domaine spectral. De même, on entend que l'ensemble de réflecteurs possède un coefficient de réflexion en intensité supérieur à 80%, de préférence supérieur à 85%, plus préférentiellement supérieur à 90% moyenné sur le deuxième domaine spectral.
- Par « transmettre », on entend que l'ensemble de réflecteurs possède un coefficient de transmission en intensité supérieur à 80%, de préférence supérieur à 85%, plus préférentiellement supérieur à 90% moyenné sur le premier domaine spectral.
- Par « premier (respectivement deuxième) domaine spectral », on entend une restriction du spectre solaire en termes de longueurs réfléchies respectivement par le miroir cylindro-parabolique et par l'ensemble de réflecteurs.
- Par « transparente », on entend que les éléments (première et deuxième surfaces de support, lame d'air, plaque) possèdent un coefficient de transmission en intensité supérieur à

80%, de préférence supérieur à 85%, plus préférentiellement supérieur à 90% moyenné sur le spectre solaire.
- Le terme « récepteur » peut désigner un récepteur thermique, c'est-à-dire un adsorbeur dans lequel circule un fluide caloporteur, ou alors un récepteur de différente nature, par exemple une cellule photovoltaïque ou une cellule photoélectrochimique.

### Brève description des dessins

D'autres caractéristiques et avantages apparaîtront dans l'exposé détaillé de différents modes de réalisation de l'invention, l'exposé étant assorti d'exemples et de références aux dessins joints.

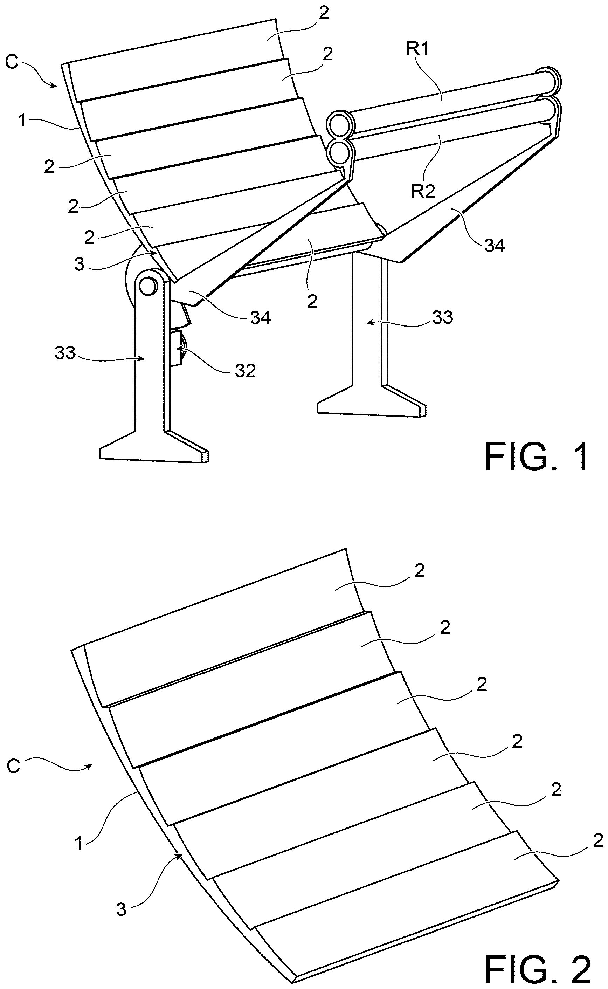

Figure 1 est une vue schématique en perspective d'une centrale solaire selon l'invention.
Figure 2 est une vue schématique partielle en perspective avant d'un concentrateur selon l'invention.

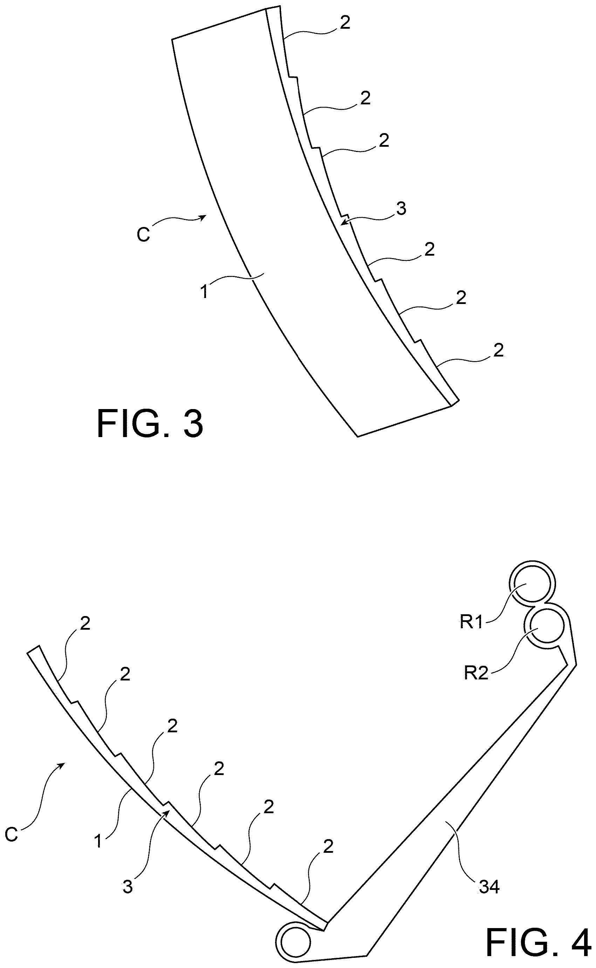

Figure 3 est une vue schématique partielle en perspective arrière d'un concentrateur selon l'invention.
Figure 4 est une vue schématique partielle de côté d'une centrale solaire selon l'invention.

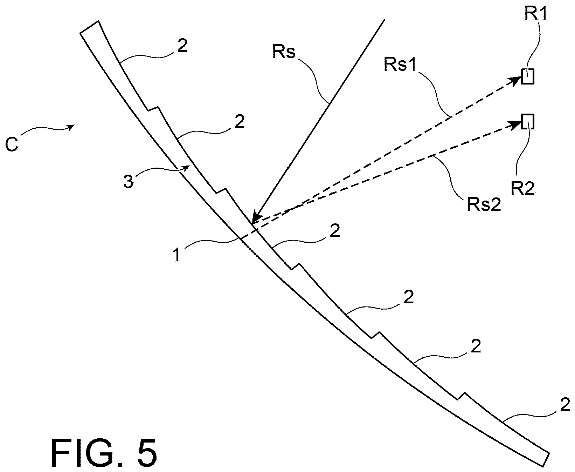

Figure 5 est une vue schématique partielle de côté d'un concentrateur selon l'invention, illustrant le trajet d'un rayonnement solaire incident vers les premier et deuxième récepteurs.
Figure 6 est une vue schématique analogue à la figure 5, illustrant le trajet d'un rayonnement solaire avec une incidence normale vers les premier et deuxième récepteurs.
Figure 7 est une vue schématique de côté à l'échelle agrandie d'une partie d'un concentrateur selon l'invention, illustrant un angle d'inclinaison entre le miroir cylindro-parabolique et un réflecteur.

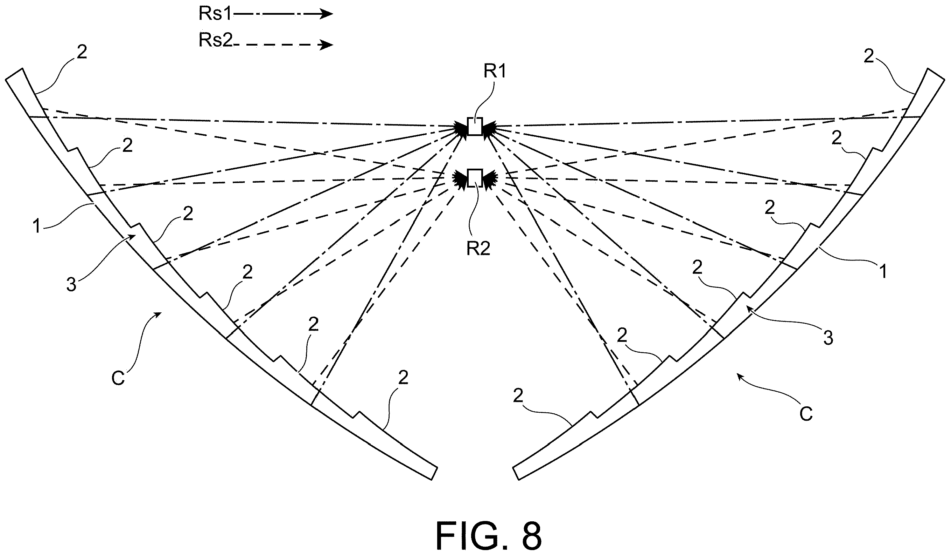

Figure 8 est une vue schématique partielle d'une centrale solaire selon l'invention, illustrant la présence de deux concentrateurs.

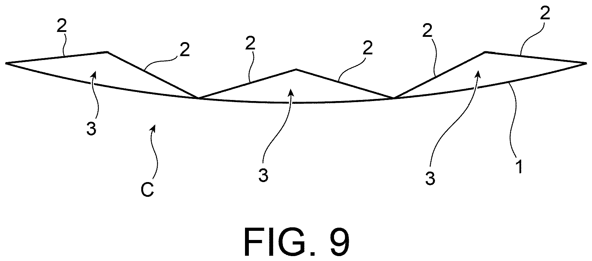

Figure 9 est une vue schématique partielle de côté d'un concentrateur selon l'invention, illustrant des réflecteurs présentant une forme de créneaux triangulaires.

Il est à noter que les dessins décrits ci-avant sont schématiques, et ne sont pas nécessairement à l'échelle par souci de lisibilité et pour en simplifier leur compréhension.

### Exposé détaillé des modes de réalisation

Les éléments identiques ou assurant la même fonction porteront les mêmes références pour les différents modes de réalisation, par souci de simplification.

Un objet de l'invention est un concentrateur C d'un rayonnement solaire Rs incident présentant un spectre solaire, le concentrateur C comportant :
- un miroir cylindro-parabolique 1, agencé pour recevoir le rayonnement solaire Rs incident, conçu pour réfléchir un premier domaine spectral Rs1 du spectre solaire ;
- un ensemble de réflecteurs 2, agencé au-dessus du miroir cylindro-parabolique 1 pour recevoir le rayonnement solaire Rs incident, conçu pour transmettre le premier domaine spectral Rs1 au miroir cylindro-parabolique 1 et réfléchir un deuxième domaine spectral Rs2, différent du premier domaine spectral Rs1.

### Miroir cylindro-parabolique

Le miroir cylindro-parabolique 1 est agencé pour recevoir le rayonnement solaire Rs incident. Le miroir cylindro-parabolique 1 est conçu pour réfléchir un premier domaine spectral Rs1 du spectre solaire.

Le miroir cylindro-parabolique 1 est avantageusement réalisé dans un matériau choisi parmi l'argent et l'aluminium.

Le premier domaine spectral Rs1 comporte avantageusement au moins une gamme spectrale dans l'infrarouge. Le premier domaine spectral Rs1 peut comporter une gamme spectrale dans l'infrarouge, et une gamme spectrale dans le visible (longueurs d'onde comprises entre 400 nm et 780 nm).

Le miroir cylindro-parabolique 1 peut présenter un rayon de courbure compris entre 0,5 m et 20m, de préférence compris entre 0,5 m et 15 m. Le miroir cylindro-parabolique 1 peut présenter une distance focale comprise entre 0,5 m et 20 m.

### Ensemble de réflecteurs

L'ensemble de réflecteurs 2 est agencé au-dessus du miroir cylindro-parabolique 1. L'ensemble de réflecteurs 2 est agencé pour recevoir le rayonnement solaire Rs incident. L'ensemble de réflecteurs 2 est conçu pour transmettre le premier domaine spectral Rs1 au miroir cylindro-parabolique 1. L'ensemble de réflecteurs 2 est conçu pour réfléchir un deuxième spectral Rs2, différent du premier domaine spectral Rs1. Le nombre et la dimension des réflecteurs 2 sont choisis en fonction du niveau de concentration souhaité.

Les réflecteurs 2 de l'ensemble sont avantageusement choisis parmi des miroirs dichroïques et des miroirs de Bragg. Les miroirs dichroïques sont à privilégier en raison de la plus grande dispersion du rayonnement transmis par les miroirs de Bragg.

Le deuxième domaine spectral Rs2 comporte avantageusement au moins une gamme spectrale dans les ultraviolets. Le deuxième domaine spectral Rs2 peut comporter une gamme spectrale dans les ultraviolets, et une gamme spectrale dans le visible (longueurs d'onde comprises entre 400 nm et 780 nm).

A titre d'exemple non limitatif, chaque réflecteur 2 de l'ensemble peut être un miroir dichroïque DMLP425, commercialisé par la société THORLABS. Le coefficient de réflexion en intensité moyenné sur la gamme spectrale [380 nm ; 410 nm] est supérieur à 95%. Le coefficient de transmission en intensité moyenné sur la gamme spectrale [440 nm ; 800 nm] est supérieur à 90%.

L'ensemble de réflecteurs 2 est avantageusement agencé au-dessus du miroir cylindro-parabolique 1 de manière à définir une forme crénelée, c'est-à-dire présentant une alternance, de préférence régulière, de parties saillantes et de parties creuses s'étendant suivant la courbure parabolique du miroir cylindro-parabolique 1. En d'autres termes, l'ensemble de réflecteurs 2 définit une segmentation crénelée de forme parabolique. Une telle forme crénelée d'une pluralité de réflecteurs 2 permet d'obtenir une grande flexibilité pour s'adapter au positionnement et au dimensionnement de récepteurs R1, R2 lorsque le concentrateur C équipe une centrale solaire, ce qui est impossible avec un unique réflecteur 2 en forme de parabole ou de portion de parabole (i.e. segment de parabole). De plus, une telle forme crénelée laisse dégagé l'ensemble de réflecteurs 2, ce qui permet aisément leur nettoyage.

Chaque réflecteur 2 de l'ensemble présente avantageusement une épaisseur comprise entre 2 mm et 15 mm, ce qui permet d'obtenir un concentrateur C léger. De plus, une telle épaisseur autorise une fabrication initiale de miroir plans courbés ultérieurement afin d'obtenir une pluralité de réflecteurs 2 définissant une forme crénelée s'étendant suivant la courbure parabolique du miroir cylindro-parabolique 1.

### Structure

Le concentrateur C peut comporter une structure 3 munie de première et deuxième surfaces de support 30, 31 opposées. Les première et deuxième surfaces de support 30, 31 sont transparentes dans le spectre solaire. Le miroir cylindro-parabolique 1 s'étend sur la première surface de support 30. L'ensemble de réflecteurs 2 s'étend sur la deuxième surface de support 31. Les réflecteurs 2 peuvent être formés sur la deuxième surface de support 31 par une technique de dépôt sous vide connue de l'homme du métier.

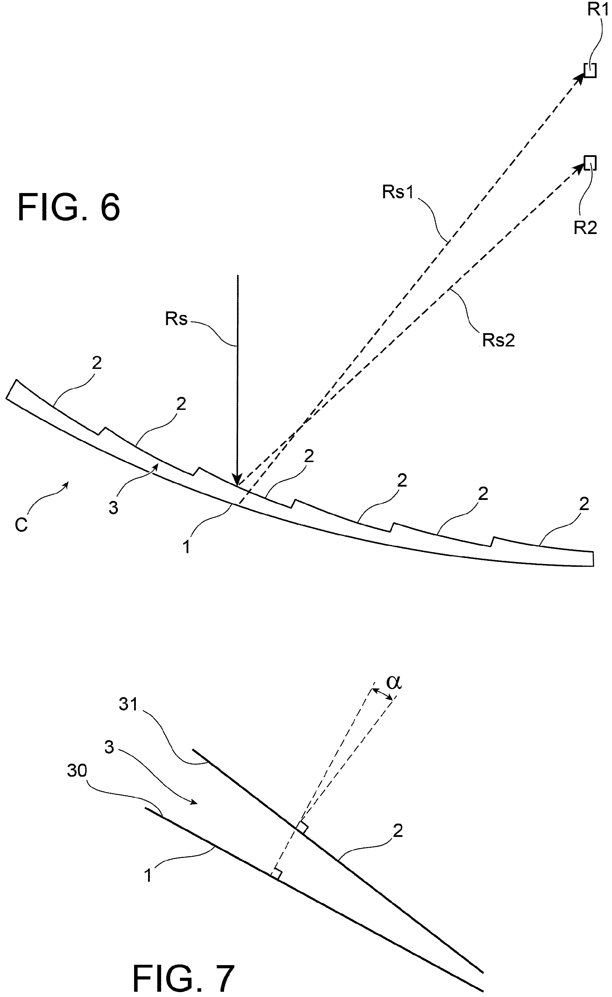

La structure 3 présente une première surface de support 30 incurvée, possédant un rayon de courbure adapté au rayon de courbure du miroir cylindro-parabolique 1 de sorte que le miroir cylindro-parabolique 1 peut s'étendre sur la première surface de support 30. La structure 3 peut présenter une deuxième surface de support 31 crénelée ou dentelée. A titre d'exemple non limitatif, la deuxième surface de support 31 crénelée peut comporter des motifs de section triangulaire. Les première et deuxième surfaces de support 30, 31 sont avantageusement agencées de sorte que chaque réflecteur 2 s'étend suivant une direction oblique (selon un angle d'inclinaison α) par rapport à la partie sous-jacente arquée du miroir cylindro-parabolique 1 (plus précisément par rapport à la corde de la partie sous-jacente arquée). A titre d'exemple non limitatif, l'angle d'inclinaison α peut être compris entre 0,1° et 10°. Il est à noter que, par souci de clarté, l'angle d'inclinaison α est illustré à la figure 7 entre la normale à la corde de la partie sous-jacente arquée du miroir cylindro-parabolique 1 et la normale à la direction suivant laquelle s'étend le réflecteur 2 correspondant. Cet angle d'inclinaison α correspond bien à l'inclinaison entre la direction suivant laquelle s'étend le réflecteur 2 et la corde de la partie sous-jacente arquée du miroir cylindro-parabolique 1, par isométrie de la rotation (en particulier à 90°) en géométrie euclidienne.

Selon un premier mode de réalisation, la structure 3 comporte une lame d'air, transparente dans le spectre solaire, agencée entre les première et deuxième surfaces de support 30, 31 opposées.

Selon un deuxième mode de réalisation, la structure 3 comporte une plaque transparente dans le spectre solaire, comprenant les première et deuxième surfaces de support 30, 31 opposées. La plaque est avantageusement réalisée dans un matériau choisi parmi un verre extra-clair, le polycarbonate, le polyméthacrylate de méthyle, le polychlorure de vinyle. A titre d'exemple non limitatif, la plaque peut être réalisée par un procédé d'extrusion. La plaque peut être réalisée par un assemblage de plusieurs sous-plaques afin d'atteindre une dimension latérale de l'ordre de 10 m.

La structure 3 comporte avantageusement des moyens de déplacement 32, configurés pour déplacer les première et deuxième surfaces de support 30, 31 en fonction d'une direction du rayonnement solaire Rs incident, de manière à orienter le miroir cylindro-parabolique 1 et l'ensemble de réflecteurs 2 pour recevoir une intensité maximale du rayonnement solaire Rs incident. Les moyens de déplacement 32 peuvent comporter un moteur électrique et un ensemble d'engrenages à roues dentées. A titre de variante, les moyens de déplacement peuvent comporter une bielle (manivelle) et un vérin (hydraulique ou électrique).

La structure 3 comporte avantageusement des montants 33, sur lesquels sont montés les moyens de déplacement 32. La structure 3 comporte avantageusement des bras de déport 34, conçus pour assurer une fonction de déport (éloignement) entre le concentrateur C et des récepteurs R1, R2. Les bras de déport 34 sont agencés de sorte que les récepteurs R1, R2 se situent au voisinage du foyer du miroir cylindro-parabolique 1.

### Centrale solaire

L'invention a également pour objet une centrale solaire, comportant :
- au moins un concentrateur C conforme à l'invention ;
- au moins un premier récepteur R1, agencé pour recevoir le premier domaine spectral Rs1 réfléchi par le miroir cylindro-parabolique 1 de l'au moins un concentrateur C ;
- au moins un deuxième récepteur R2, agencé pour recevoir le deuxième domaine spectral Rs2 réfléchi par l'ensemble de réflecteurs 2 de l'au moins un concentrateur C.

Le ou les premiers récepteurs R1 et le ou les deuxième récepteurs R2 sont agencés au voisinage du foyer du miroir cylindro-parabolique 1. Le ou chaque premier récepteur R1 peut être réalisé sous la forme d'un tube de section circulaire avec un diamètre compris entre 10 mm et 100 mm. Le ou chaque deuxième récepteur R2 peut être réalisé sous la forme d'un tube de section rectangulaire avec une largeur comprise entre 10 mm et 2 m.

Le ou chaque premier récepteur R1 peut être un récepteur thermique, c'est-à-dire un adsorbeur dans lequel circule un fluide caloporteur. Le ou chaque deuxième récepteur R2 peut être un récepteur de différente nature, par exemple une cellule photovoltaïque ou une cellule photoélectrochimique.

A titre d'exemple non limitatif, la centrale solaire peut comporter :
- deux concentrateurs C ;
- un premier récepteur R1 thermique ;
- un deuxième récepteur R2, agencé sous le premier récepteur R1 thermique.

Les deux concentrateurs C peuvent être agencés suivant une symétrie axiale (d'axe vertical) par rapport aux premier et deuxième récepteurs R1, R2.

L'invention ne se limite pas aux modes de réalisation exposés. L'homme du métier est mis à même de considérer leurs combinaisons techniquement opérantes, et de leur substituer des équivalents.

## Revendications

1. Concentrateur (C) d'un rayonnement solaire (Rs) incident présentant un spectre solaire, le concentrateur (C) comportant :
- un miroir cylindro-parabolique (1), agencé pour recevoir le rayonnement solaire (Rs) incident, conçu pour réfléchir un premier domaine spectral (Rs1) du spectre solaire ;
- un ensemble de réflecteurs (2), agencé au-dessus du miroir cylindro-parabolique (1) pour recevoir le rayonnement solaire (Rs) incident, conçu pour transmettre le premier domaine spectral (Rs1) au miroir cylindro-parabolique (1) et réfléchir un deuxième domaine spectral (Rs2), différent du premier domaine spectral (Rs1).

2. Concentrateur (C) selon la revendication 1, dans lequel les réflecteurs (2) de l'ensemble sont choisis parmi des miroirs dichroïques et des miroirs de Bragg.

3. Concentrateur (C) selon la revendication 1 ou 2, dans lequel le miroir cylindro-parabolique (1) est réalisé dans un matériau choisi parmi l'argent et l'aluminium.

4. Concentrateur (C) selon l'une des revendications 1 à 3, dans lequel :
- le premier domaine spectral (Rs1) comporte au moins une gamme spectrale dans l'infrarouge ;
- le deuxième domaine spectral (Rs2) comporte au moins une gamme spectrale dans les ultraviolets.

5. Concentrateur (C) selon l'une des revendications 1 à 4, comportant une structure (3) munie de première et deuxième surfaces de support (30, 31) opposées, transparentes dans le spectre solaire ; le miroir cylindro-parabolique (1) s'étendant sur la première surface de support (30), l'ensemble de réflecteurs (2) s'étendant sur la deuxième surface de support (31).

6. Concentrateur (C) selon la revendication 5, dans lequel la structure (3) comporte une lame d'air, transparente dans le spectre solaire, agencée entre les première et deuxième surfaces de support (30, 31) opposées.

7. Concentrateur (C) selon la revendication 5, dans lequel la structure (3) comporte une plaque transparente dans le spectre solaire, comprenant les première et deuxième surfaces de support (30, 31) opposées.

8. Concentrateur (C) selon la revendication 7, dans lequel la plaque est réalisée dans un matériau choisi parmi un verre extra-clair, le polycarbonate, le polyméthacrylate de méthyle, le polychlorure de vinyle.

9. Concentrateur (C) selon l'une des revendications 5 à 8, dans lequel la structure (3) comporte des moyens de déplacement (32), configurés pour déplacer les première et deuxième surfaces de support (30, 31) en fonction d'une direction du rayonnement solaire (Rs) incident, de manière à orienter le miroir cylindro-parabolique (1) et l'ensemble de réflecteurs (2) pour recevoir une intensité maximale du rayonnement solaire (Rs) incident.

10. Centrale solaire, comportant :
- au moins un concentrateur (C) selon l'une des revendications 1 à 9 ;
- au moins un premier récepteur (R1), agencé pour recevoir le premier domaine spectral (Rs1) réfléchi par le miroir cylindro-parabolique (1) de l'au moins un concentrateur (C) ;
- au moins un deuxième récepteur (R2), agencé pour recevoir le deuxième domaine spectral (Rs2) réfléchi par l'ensemble de réflecteurs (2) de l'au moins un concentrateur (C).
